(19) Europäisches Patentamt
European Patent Office
Office européen des brevets

(11) EP 2 896 731 B1

(12) **EUROPEAN PATENT SPECIFICATION**

(45) Date of publication and mention of the grant of the patent:
**14.03.2018 Bulletin 2018/11**

(21) Application number: **13837434.3**

(22) Date of filing: **13.09.2013**

(51) Int Cl.:
***D04H 3/007*** *(2012.01)* ***B32B 5/26*** *(2006.01)*
***D04H 3/16*** *(2006.01)*

(86) International application number:
**PCT/JP2013/074905**

(87) International publication number:
**WO 2014/042253 (20.03.2014 Gazette 2014/12)**

(54) **MULTILAYER NONWOVEN FABRIC AND METHOD FOR PRODUCING SAME**

MEHRSCHICHTIGER VLIESSTOFF UND VERFAHREN ZU SEINER HERSTELLUNG

TEXTILE NON-TISSÉ MULTICOUCHE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2012 JP 2012203490**

(43) Date of publication of application:
**22.07.2015 Bulletin 2015/30**

(73) Proprietor: **Idemitsu Kosan Co., Ltd**
**Tokyo 100-8321 (JP)**

(72) Inventors:
- **TAKEBE, Tomoaki**
**Ichihara-shi**
**Chiba 299-0193 (JP)**
- **MINAMI, Yutaka**
**Ichihara-shi**
**Chiba 299-0193 (JP)**
- **KOORI, Yohei**
**Ichihara-shi**
**Chiba 299-0193 (JP)**

(74) Representative: **Vossius & Partner**
**Patentanwälte Rechtsanwälte mbB**
**Siebertstrasse 3**
**81675 München (DE)**

(56) References cited:
**EP-A1- 2 022 879** **EP-A1- 2 479 331**
**WO-A1-2011/030893** **WO-A1-2011/090132**
**WO-A1-2011/090132** **US-A1- 2008 172 840**

EP 2 896 731 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a multilayer nonwoven fabric in which a spunbonded nonwoven fabric layer and a meltblown nonwoven fabric layer are laminated and to a method for producing the same.

### Background Art

In recent years, polypropylene-based fibers and nonwoven fabrics using the fibers have been used for various applications including a disposable diaper, a sanitary product, a hygienic product, a clothing material, a bandage, a packaging material, medical clothing such as an operating gown, etc., and the like. A reduction in basis weight of the nonwoven fabric is important because a weight reduction is typically required for these products. In addition, in particular, in hygienic materials such as a disposal diaper, etc., a nonwoven fabric having a small mesh size and excellent water pressure resistance is needed. In addition, in applications such as medical clothing, etc., it is required that the water pressure resistance is excellent; and that nap on the surface is small.

In addition, for the purpose of bringing various functions and characteristics on a nonwoven fabric, the nonwoven fabric is made multilayred. In particular, in order to improve the water resistance of the nonwoven fabric, a multilayer nonwoven fabric (SMS structure) in which a spunbonded nonwoven fabric, a meltblown nonwoven fabric, and a spunbonded nonwoven fabric are laminated in this order is used. In such a nonwoven fabric, from the viewpoint of further improving the water pressure resistance, it is considered to be preferred to achieve reductions in denier values of the meltblown nonwoven fabric.

In PTL 1, for the purpose of achieving reductions in denier values of fibers, it is proposed to form a nonwoven fabric by using a polypropylene-based resin composition containing a high-crystalline polypropylene and a low-crystalline polypropylene.

PTL2 discloses a multilayer nonwoven fabric with a SMS structure.

### Citation List

#### Patent Literature

PTL 1: WO2011/090132

PTL2: EP 2 479 331

### Summary of Invention

#### Technical Problem

However, in the case of adopting the production method of PTL 1, there was involved such a problem that in fusing fibers or nonwoven fabrics with each other, the meltblown nonwoven fabric layer of the multilayer nonwoven fabric is apt to be pierced, or the water pressure resistance is apt to be lowered due to other factors.

In particular, the meltblown nonwoven fabric is more reduced in denier values than the spunbonded nonwoven fabric because of its production method, and therefore, the meltblown nonwoven fabric is apt to be pierced upon heating. For this reason, if a fusion temperature is adjusted such that the meltblown nonwoven fabric layer is not pierced, the bonding force between the fibers of the spunbonded nonwoven fabric layer or between the nonwoven fabrics is lowered, and the strength of the nonwoven fabric is remarkably lowered.

For the above-described reasons, in the conventional art, it was difficult to ensure layer-to-layer bonding strength and further to obtain high water pressure resistance without piercing a meltblown nonwoven fabric layer of a multilayer nonwoven fabric having a spunbonded nonwoven fabric layer and a meltblown nonwoven fabric layer.

In view of the foregoing circumstances, the present invention has been made, and an object thereof is to provide a multilayer nonwoven fabric having a meltblown nonwoven fabric layer and a spunbonded nonwoven fabric layer, the multilayer nonwoven fabric having high strength and high water pressure resistance, and a method for producing the same.

Solution to Problem

The present inventors have found that by regulating a melting endotherm ΔH of a resin that forms a spunbonded nonwoven fabric layer to a prescribed value or less, it is possible to fuse fibers or nonwoven fabrics with each other at a low temperature, thereby enabling the above-described problem to be solved, leading to accomplishment of the present invention.

Specifically, the present invention is concerned with the following [1] to [6].

[1] A multilayer nonwoven fabric including three or more layers, wherein
two outermost layers are spunbonded nonwoven fabric layers,
at least one inner layer is a meltblown nonwoven fabric layer, and
a resin that forms the spunbonded nonwoven fabric layer has a melting endotherm ΔH, as measured from a melting endothermic curve which is obtained by holding the resin at -10°C for 5 minutes under a nitrogen atmosphere and then increasing the temperature at a rate of 10°C/min with a differential scanning calorimeter (DSC), of 90 J/g or less.
[2] The multilayer nonwoven fabric as set forth in [1], wherein the resin that forms the spunbonded nonwoven fabric layer contains from 1 to 50 mass% of a low-crystalline polypropylene and from 50 to 99 mass% of a high-crystalline polypropylene,
[3] The multilayer nonwoven fabric as set forth in [2], wherein the low-crystalline polypropylene satisfies the following characteristics (a) to (e):

(a) [mmmm] = 20 to 60 mol%,
(b) [rrrr]/(1-[mmmm]) ≤ 0.1,
(c) weight-average molecular weight (Mw) = 10,000 to 200,000,
(d) molecular weight distribution (Mw/Mn) < 4, and
(e) a melting point (Tm-D), as defined as a peak top of a peak observed on the highest temperature side of a melting endothermic curve which is obtained by holding the low-cristalline polypropylene at -10°C for 5 minutes under a nitrogen atmosphere and then increasing the temperature at a rate of 10°C/min with a differential scanning calorimeter (DSC), is from 0 to 120°C.

[4] The multilayer nonwoven fabric as set forth in any one of [1] to [3], which is produced by laminating the spunbonded nonwoven fabric layers and the meltblown nonwoven fabric layer and then heat treating the layers at a temperature of 130°C or lower.
[5] The multilayer nonwoven fabric as set forth in any one of [1] to [4], wherein the resin that forms the meltblown nonwoven fabric layer contains from 1 to 50 mass% of a low-crystalline polypropylene and from 50 to 99 mass% of a high-crystalline polypropylene, and the low-crystalline polypropylene satisfies the following characteristics (a) to (d) and (f) to (g):

(a) [mmmm] = 20 to 60 mol%,
(b) [rrrr]/(1-[mmmm]) ≤ 0.1,
(c) weight-average molecular weight (Mw) = 10,000 to 200,000,
(d) molecular weight distribution (Mw/Mn) < 4,
(f) [rmrm] > 2.5 mol%, and
(g) $[mm]\times[rr]/[mr]^2 \leq 2.0$.

[6] A method for producing a multilayer nonwoven fabric including three or more layers, which includes laminating, as two outermost layers, spunbonded nonwoven fabric layers, each of which is formed of a resin having a melting endotherm ΔH, as measured from a melting endothermic curve which is obtained by holding the resin at -10°C for 5 minutes under a nitrogen atmosphere and then increasing the temperature at a rate of 10°C/min with a differential scanning calorimeter (DSC), of 90 J/g or less and, as at least one inner layer, a meltblown nonwoven fabric layer; and then heat treating the layers at a temperature of 130° C or lower.

Advantageous Effects of Invention

According to the present invention, it is possible to provide a multilayer nonwoven fabric having high strength and further having high water pressure resistance and a method for producing the same.

Description of Embodiments

The present invention is concerned with a multilayer nonwoven fabric including three or more layers, wherein two outermost layers are spunbonded nonwoven fabric layers, at least one inner layer is a meltblown nonwoven fabric layer, and a resin that forms the spunbonded nonwoven fabric layer has a melting endotherm ΔH, as measured from a melting endothermic curve which is obtained by holding the resin at -10°C for 5 minutes under a nitrogen atmosphere and then increasing the temperature at a rate of 10°C/min with a differential scanning calorimeter (DSC), of 90 J/g or less.

[Spunbonded nonwoven fabric layer]

The spunbonded nonwoven fabric layer of the present invention is composed of a nonwoven fabric formed by a spunbond method.

The spunbonded nonwoven fabric layer is constituted of a resin having a melting endotherm ΔH, as measured from a melting endothermic curve which is obtained by holding the resin at -10°C for 5 minutes under a nitrogen atmosphere and then increasing the temperature at a rate of 10°C/min with a differential scanning calorimeter (DSC), of 90 J/g or less.

When the melting endotherm ΔH is more than 90 J/g, in fusing the meltblown nonwoven fabric layer and the spunbonded nonwoven fabric layer with each other, the meltblown nonwoven fabric layer is pierced, and the water pressure resistance is lowered. The melting endotherm ΔH is preferably 88 J/g or less, more preferably 86 J/g or less, and still more preferably 84 J/g or less. In addition, from the viewpoint of high strength, the melting endotherm ΔH is preferably 40 J/g or more, and more preferably 70 J/g or more. From the viewpoint of a balance between the water pressure resistance and the high strength, the melting endotherm ΔH is preferably 40 J/g or more and 90 J/g or less, more preferably 45 J/g or more and 88 J/g or less, still more preferably 50 J/g or more and 86 J/g or less, and especially preferably 70 J/g or more and 84 J/g or less.

In order to control the melting endotherm ΔH, for example, there is a method of using two or more kinds of polypropylenes having a different melting point from each other, and the melting endotherm ΔH can be controlled by using a high-crystalline polypropylene and a polypropylene having lower crystallinity than the high-crystalline polypropylene.

As for the resin that forms the spunbonded nonwoven fabric layer, so long as the requirement of the melting endotherm ΔH is satisfied, one kind or two or more kinds of resins may be used. From the viewpoint that it is easy to control the melting endotherm ΔH, the resin that forms the spunbonded nonwoven fabric is preferably a polypropylene-based resin composition composed of two or more kinds of resins, and especially preferably a polypropylene-based resin composition containing a low-crystalline polypropylene and a high-crystalline polypropylene.

In addition, the crystalline polypropylene refers to a polypropylene in which its melting point is observed by means of measurement with a differential scanning calorimeter (DSC) as described below. The high-crystalline polypropylene refers to a crystalline polypropylene having such a melting point of 150°C or higher; and the low-crystalline polypropylene refers to a polypropylene having a melting point lower than the foregoing high-crystalline polypropylene, for example, a crystalline polypropylene having such a melting point of from 0 to 120°C.

It should be noted that the melting point (Tm-D) is defined as a peak top of a peak observed on the highest temperature side of a melting endothermic curve which is obtained by holding the resin at -10°C for 5 minutes under a nitrogen atmosphere and then increasing the temperature at a rate of 10°C/min with a differential scanning calorimeter (DSC).

The low-crystalline polypropylene which is used for the spunbonded nonwoven fabric layer of the present invention is preferably a polypropylene satisfying the following characteristics (a) to (e), and more preferably a polypropylene satisfying the following characteristics (a) to (g).

(a) [mmmm] = 20 to 60 mol%

As for the low-crystalline polypropylene, from the viewpoints of quickness of solidification after melting and prevention of end breakage, its [mmmm] (meso pentad fraction) is preferably from 20 to 60 mol%, preferably from 30 to 50 mol%, and more preferably from 40 to 50 mol%.

(b) [rrrr]/(1-[mmmm]) ≤ 0.1

As for the low-cristalline polypropylene, from the viewpoint of prevention of tack, its [rrrr]/(1-[mmmm]) is preferably 0.1 or less, more preferably 0.05 or less, and still more preferably 0.04 or less. The [rrrr]/(1-[mmmm]) is an indicator showing the uniformity of the regularity distribution of the low-crystalline polypropylene. When this value becomes large, a mixture of a high-stereoregularity polypropylene and an atactic polypropylene is obtained as in the case of a conventional polypropylene produced by using an existing catalyst system. It should be noted that the above-described [rrrr] is a racemic pentad fraction. In addition, the [rrrr] and [mmmm] in the above-described (b) are calculated as a usual ratio but not a numerical value of mol% unit.

(c) Weight-average molecular weight (Mw) = 10,000 to 200,000

As for the low-crystalline polypropylene, from the viewpoints of appropriately keeping the melt viscosity of the low-crystalline polypropylene and making the spinnability good, its weight-average molecular weight is preferably from 10,000 to 200,000, more preferably from 30,000 to 100,000, and still more preferably from 40,000 to 80,000.

(d) Molecular weight distribution (Mw/Mn) < 4

As for the low-crystalline polypropylene, from the viewpoint of suppressing the occurrence of tack in the fibers obtained by spinning, its molecular weight distribution (Mw/Mn) is preferably less than 4, and more preferably 3 or less.

(e) A melting point (Tm-D), as defined as a peak top of a peak observed on the highest temperature side of a melting endothermic curve which is obtained by holding the low-crystalline polypropylene at -10°C for 5 minutes under a nitrogen atmosphere and then increasing the temperature at a rate of 10°C/min with a differential scanning calorimeter (DSC), is from 0 to 120°C.

(f) [rmrm] > 2.5 mol%

As for the low-crystalline polypropylene, from the viewpoint of making the low-crystalline polypropylene have appropriate stereoregularity, thereby hardly causing end breakage, its [rmrm] (racemic-meso-racemic-meso pentad fraction) is preferably more than 2.5 mol%, more preferably 2.6 mol% or more, and still more preferably 2.7 mol% or more. Although an upper limit thereof is not particularly limited, it is typically 10 mol%.

(g) $[mm]\times[rr]/[mr]^2 \leq 2.0$

As for the low-crystalline polypropylene, from the viewpoint of suppressing end breakage and tack, its $[mm]\times[rr]/[mr]^2$ is preferably 2.0 or less, more preferably from 0.25 to 1.8, and still more preferably from 0.5 to 1.5. [mm] represents a meso triad fraction; [rr] represents a racemic triad fraction; and [mr] represents a meso racemic triad fraction. The $[mm]\times[rr]/[mr]^2$ represents an indicator for the randomness of the polymer, and the smaller the value, the higher the randomness is.

The use of the low-crystalline polypropylene satisfying the foregoing characteristics (a) to (e) together with a high-crystalline polypropylene compensates for the drawbacks of the high-crystalline polypropylene, thereby obtaining a raw material composition suitable for the production of the target nonwoven fabric.

It should be noted that the low-crystalline polypropylene which is used for the spunbonded nonwoven fabric layer of the present invention may be a copolymer using a comonomer other than propylene within a range where the object of the present invention is not impaired. In this case, the content of the comonomer is typically 2 mass% or less. Examples of the comonomer include ethylene, 1-butene, 1-pentene, 4-methyl-1-pentene, 1-hexene, 1-octene, 1-decene, 1-dodecene, 1-tetradecene, 1-hexadecene, 1-octadecene, 1-eicosene, and the like. Of those, one kind or two or more kinds thereof can be used in the present invention.

Examples of a method of producing the low-crystalline polypropylene which is used for the spunbonded nonwoven fabric layer of the present invention include a method of using a metallocene catalyst. Examples of the metallocene catalyst include a metallocene catalyst obtained by combining (A) a transition metal compound in which crosslinked structures are formed through two crosslinking groups and (B) a co-catalyst. Specifically, examples thereof include a polymerization catalyst containing (A) a transition metal compound represented by the general formula (1) and (B) a co-catalyst component selected from (B-1) a compound and (B-2) an aluminoxane, each of which is capable of reacting with the transition metal compound that is the component (A) or a derivative thereof to form an ionic complex.

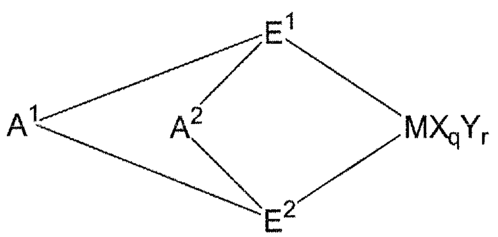

... (I)

[In the formula,

M represents a metal element belonging to any one of the Groups 3 to 10 or the lanthanoid series in the periodic table (preferably a metal element belonging to the Group 4 in the periodic table);

each of $E^1$ and $E^2$ represents a ligand selected from a substituted cyclopentadienyl group, an indenyl group, a substituted indenyl group, a heterocyclopentadienyl group, and a substituted heterocyclopentadienyl group and forms a crosslinked structure through $A^1$ and $A^2$, and may be the same as or different from each other;

X represents a σ-bonding ligand, and when a plurality of Xs are present, the plurality of Xs may be the same as or different from each other, and each X may crosslink with any other X, $E^1$, $E^2$, or Y;

Y represents a Lewis base, and when a plurality of Ys are present, the plurality of Ys may be the same as or different from each other, and each Y may crosslink with any other Y, $E^1$, $E^2$, or X;
each of $A^1$ and $A^2$ represents a divalent crosslinking group that bonds two ligands and represents a hydrocarbon group having from 1 to 20 carbon atoms, a halogen-containing hydrocarbon group having from 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$, or $-AlR^1-$, wherein $R^1$ represents a hydrogen atom, a halogen atom, a hydrocarbon group having from 1 to 20 carbon atoms, or a halogen-containing hydrocarbon group having from 1 to 20 carbon atoms, and may be the same as or different from each other;
q represents an integer of from 1 to 5 and corresponds to [(valence of M) - 2]; and
r represents an integer of from 0 to 3.]

Specific examples of the transition metal compound represented by the general formula (I) include (1,2'-dimethylsilylene)(2,1'-dimethylsilylene)bis(3-n-butylindenyl) zirconium dichloride, (1,2'-dimethylsilylene)(2,1'-dimethylsilylene)bis(3-trimethylsilylmethylindenyl)zirconium dichloride, (1,2'-dimethylsilylene)(2,1'-dimethylsilylene)bis(3-phenylindenyl) zirconium dichloride, (1,2'-dimethylsilylene)(2,1'-dimethylsilylene)bis(4,5-benzoindenyl)zirconium dichloride, (1,2'-dimethylsilylene)(2,1'-dimethylsilylene)bis(4-isopropylindenyl)zirconium dichloride, (1,2'-dimethylsilylene)(2,1'-dimethylsilylene)bis(5,6-dimethylindenyl) zirconium dichloride, (1,2'-dimethylsilylene)(2,1'-dimethylsilylene)bis(4,7-diisopropylindenyl)zirconium dichloride, (1,2'-dimethylsilylene)(2,1'-dimethylsilylene)bis(4-phenylindenyl)zirconium dichloride, (1,2'-dimethylsilylene)(2,1'-dimethylsilylene)bis(3-methyl-4-isopropylindenyl)zirconium dichloride, (1,2'-dimethylsilylene)(2,1'-dimethylsilylene)bis(5,6-benzoindenyl)zirconium dichloride, (1,2'-dimethylsilylene)(2,1'-isopropylidene)-bis(indenyl)zirconium dichloride, (1,2'-dimethylsilylene)(2,1'-isopropylidene)-bis(3-methylindenyl)zirconium dichloride, (1,2'-dimethylsilylene)(2,1'-isopropylidene)-bis(3-isopropylindenyl)zirconium dichloride, (1,2'-dimethylsilylene)(2,1'-isopropylidene)-bis(3-n-butylindenyl)zirconium dichloride, (1,2'-dimethylsilylene)(2,1'-isopropylidene)-bis(3-trimethylsilylmethylindenyl)zirconium dichloride, and the like, and compounds obtained by substituting zirconium with titanium or hafnium in those compounds.

Next, examples of the component (B-1) of the component (B) include dimethylanilinium tetrakispentafluorophenylborate, triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, and the like.

One kind of the components (B-1) may be used, or two or more kinds thereof may be used in combination. Meanwhile, examples of the aluminoxane that is the component (B-2) include methylaluminoxane, ethylaluminoxane, isobutylaluminoxane, and the like. One kind of those aluminoxanes may be used, or two or more kinds thereof may be used in combination. In addition, one or more kinds of the above-described components (B-1) and one or more kinds of the above-described components (B-2) may be used in combination.

As for the above-described polymerization catalyst, an organoaluminum compound can be used as a component (C) in addition to the above-described components (A) and (B). Here, examples of the organoaluminum compound that is the component (C) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, ethylaluminum sesquichloride, and the like. One kind of those organoaluminum compounds may be used, or two or more kinds thereof may be used in combination. Here, upon polymerization of propylene, at least one kind of the catalyst components can be used while being supported on a proper carrier.

A polymerization method is not particularly limited, and any of methods such as a slurry polymerization method, a vapor phase polymerization method, a bulk polymerization method, a solution polymerization method, a suspension polymerization method, etc. may be adopted, with a bulk polymerization method and a solution polymerization method being especially preferred. A polymerization temperature is typically from -100 to 250°C, and a use proportion of the catalyst relative to the reaction raw material is preferably from 1 to 108, and especially preferably from 100 to 105 in terms of a molar ratio of the raw material monomer to the component (A). Furthermore, a polymerization time is typically from 5 minutes to 10 hours, and a reaction pressure is typically from atmospheric pressure to 20 MPa (gauge).

[High-crystalline polypropylene]

The kind of the high-crystalline polypropylene which is used for the spunbonded nonwoven fabric layer of the present invention is not particularly limited, and examples thereof include a propylene homopolymer, a propylene random copolymer, a propylene block copolymer, and the like.

A melting point of the high-crystalline polypropylene is preferably from 150 to 167°C, and more preferably from 155 to 165°C.

A melt flow rate (MFR) of the high-crystalline polypropylene is preferably from 10 to 2,000 g/10 min, more

preferably from 15 to 1,000 g/10 min, and still more preferably from 20 to 500 g/10 min.

(Polypropylene-based resin composition)

The polypropylene-based resin composition which is used for the spunbonded nonwoven fabric layer of the present invention is preferably a combination of from 1 to 50 mass% of the low-crystalline polypropylene and from 50 to 99 mass% of the high-crystalline polypropylene, more preferably a combination of from 5 to 40 mass% of the low-crystalline polypropylene and from 60 to 95 mass% of the high-crystalline polypropylene, and still more preferably a combination of from 10 to 30 mass% of the low-crystalline polypropylene and from 70 to 90 mass% of the high-crystalline polypropylene.

The polypropylene-based resin composition which is used for the spunbonded nonwoven fabric layer of the present invention may contain other thermoplastic resin or additive so long as the composition satisfies the above-described physical properties.

Examples of the other thermoplastic resin include olefin-based polymers, and specifically, examples thereof include a polypropylene, a propylene-ethylene copolymer, a propylene-ethylene-diene copolymer, a polyethylene, an ethylene/$\alpha$-olefin copolymer, an ethylene-vinyl acetate copolymer, a hydrogenated styrene-based elastomer, and the like. One kind of those thermoplastic resins may be used solely, or two or more kinds thereof may be used in combination.

As the additive, conventionally known additives can be blended. Examples thereof include additives such as a foaming agent, a crystal nucleating agent, a weathering agent, a UV absorber, a light stabilizer, a heat resistance stabilizer, an antistatic agent, a mold releasing agent, a flame retardant, a synthetic oil, a wax, an electric property-improving agent, a slip inhibitor, an anti-blocking agent, a viscosity modifier, a coloring inhibitor, a defogging agent, a lubricant, a pigment, a dye, a plasticizer, a softening agent, an age resistor, a hydrochloric acid-absorbing agent, a chlorine scavenger, an antioxidant, an anti-tack agent, etc.

[Meltblown nonwoven fabric layer]

The meltblown nonwoven fabric layer is composed of a nonwoven fabric formed by a meltblown method.

Although the resin that forms the meltblown nonwoven fabric layer is not particularly limited, examples thereof include polyethylene, polypropylene, and polyester. Of those, the resin is preferably polypropylene.

While a method of laminating a spunbonded nonwoven fabric layer and a meltblown nonwoven fabric layer in the multilayer nonwoven fabric of the present invention is described later, in the case of directly depositing fibers formed by the meltblown method on a spunbonded nonwoven fabric to form a meltblown nonwoven fabric (online molding), after laminating the respective layers, it is necessary to perform a heat treatment; in this respect, in the case where a heat treatment temperature is high, there is a concern that the meltblown nonwoven fabric layer is pierced, whereby the water resistance is lowered. Therefore, it is preferred that the meltblown nonwoven fabric layer in the case of the online molding is molded from a high-crystalline polypropylene having a high melting point among polypropylenes.

In addition, in the case of blowing meltblown fibers between the two previously produced spunbonded nonwoven fabrics as the outermost layers to form a meltblown layer (offline molding), the meltblown layer bears a role as an adhesive layer for allowing the two spunbonded nonwoven fabric layers as the outermost layers to adhere to each other. For that reason, in view of the fact that an improvement of the water resistance can be expected by reducing the fibers of the meltblown layer in denier values, it is preferred to mold the meltblown layer by a polypropylene-based resin composition containing a low-crystalline polypropylene and a high-crystalline polypropylene among polypropylenes.

From the viewpoint of being used for a disposable diaper, among polypropylenes, a polypropylene-based resin composition containing a low-crystalline polypropylene and a high-crystalline polypropylene is preferred. By using such a polypropylene-based resin composition, the fibers of the meltblown nonwoven fabric can be reduced in denier values.

From the viewpoint of being used for medical clothing, among polypropylenes, a polypropylene-based resin composition containing a high-crystalline polypropylene and not substantially containing a low-crystalline polypropylene is preferred, and a polypropylene-based resin composition composed of a high-crystalline polypropylene is more preferred, from the viewpoint of improving the water resistance. The terms "not substantially containing" mean that the content is 1 mass% or less in the polypropylene-based resin composition.

In the meltblown nonwoven fabric layer, as the above-described low-crystalline polypropylene and high-crystalline polypropylene as well as other components, the same materials as those in the previously described spunbonded nonwoven fabric layer can be used. A polypropylene-based composition which is suitably used in the meltblown nonwoven fabric layer is hereunder described.

In the polypropylene-based resin composition which is used for the meltblown nonwoven fabric layer, from the viewpoint of reducing the nonwoven fabric fibers in denier values, the low-crystalline polypropylene is preferably one satisfying the above-described characteristics (a) to (d) and (f) to (g).

In the meltblown nonwoven fabric layer, a melt flow rate (MFR) of the high-crystalline polypropylene is preferably

from 100 to 2,000 g/10 min, more preferably from 500 to 1,800 g/10 min, and still more preferably from 700 to 1,600 g/10 min.

The polypropylene-based resin composition which is used for the meltblown nonwoven fabric layer can be selected depending upon the lamination method of the multilayer nonwoven fabric of the present invention. Specifically, in the case of the online molding, the polypropylene-based resin composition which is used for the meltblown nonwoven fabric layer is preferably a combination of from 0 to 5 mass% of the low-crystalline polypropylene and from 95 to 100 mass% of the high-crystalline polypropylene, more preferably a combination of from 0 to 3 mass% of the low-crystalline polypropylene and from 97 to 100 mass% of the high-crystalline polypropylene, and still more preferably 100 mass% of the high-crystalline polypropylene. In the case of the offline molding, the polypropylene-based resin composition which is used for the meltblown nonwoven fabric layer is preferably a combination of from 1 to 50 mass% of the low-crystalline polypropylene and from 50 to 99 mass% of the high-crystalline polypropylene, more preferably a combination of from 5 to 50 mass% of the low-crystalline polypropylene and from 50 to 95 mass% of the high-crystalline polypropylene, and still more preferably a combination of from 20 to 40 mass% of the low-crystalline polypropylene and from 60 to 80 mass% of the high-crystalline polypropylene.

From the viewpoint of being used for a disposable diaper, though the polypropylene-based resin composition which is used for the meltblown nonwoven fabric layer is not particularly limited, the polypropylene-based resin composition is preferably a combination of from 1 to 50 mass% of a low-crystalline polypropylene and from 50 to 99 mass% of a high-crystalline polypropylene, more preferably a combination of from 5 to 50 mass% of a low-crystalline polypropylene and from 50 to 95 mass% of a high-crystalline polypropylene, and still more preferably a combination of from 20 to 40 mass% of a low-crystalline polypropylene and from 60 to 80 mass% of a high-crystalline polypropylene.

From the viewpoint of being used for medical clothing, though the polypropylene-based resin composition which is used for the meltblown nonwoven fabric layer is not particularly limited, the polypropylene-based resin composition preferably contains 80 mass% or more of a high-crystalline polypropylene, more preferably contains 90 mass% or more of a high-crystalline polypropylene, and still more preferably contains 95 mass% or more of a high-crystalline polypropylene, and the polypropylene-based resin composition is yet still more preferably composed of only a high-crystalline polypropylene.

The resin that forms the meltblown nonwoven fabric layer has a melting endotherm $\Delta H$, as measured from a melting endothermic curve which is obtained by holding the resin at -10°C for 5 minutes under a nitrogen atmosphere and then increasing the temperature at a rate of 10°C/min with a differential scanning calorimeter (DSC), of preferably 40 J/g or more and 95 J/g or less, more preferably 50 J/g or more and 93 J/g or less, and still more preferably 60 J/g or more and 90 J/g or less. When the resin has a melting endotherm falling within the foregoing range, the meltblown nonwoven fabric can be reduced in denier values. Meanwhile, though the meltblown nonwoven fabric layer is apt to be pierced at the time of fusion, through a combination with the resin forming the spunbonded nonwoven fabric layer of the invention of the present application, melt adhesion between the spunbonded nonwoven fabric layer and the meltblown nonwoven fabric layer can be sufficiently performed without piercing the meltblown nonwoven fabric layer, and a multilayer nonwoven fabric having remarkably high water pressure resistance is obtained.

A melt flow rate (MFR) of the resin that forms the meltblown nonwoven fabric layer is preferably from 500 to 2,000 g/10 min, more preferably from 600 to 1,900 g/10 min, and still more preferably from 800 to 1,800 g/10 min.

An average fiber diameter of the fiber that forms the meltblown nonwoven fabric is preferably from 0.1 to 30 μm, more preferably from 0.5 to 20 μm, and still more preferably from 0.5 to 10 μm.

[Multilayer nonwoven fabric]

The multilayer nonwoven fabric of the present invention is composed of three or more layers. The two outermost layers each are a spunbonded nonwoven fabric layer, and at least one inner layer is a meltblown nonwoven fabric layer.

Although the multilayer nonwoven fabric of the present invention is not particularly limited, it is preferred that the spunbonded nonwoven fabric layer and the meltblown nonwoven fabric layer are adjacent to each other.

Although the multilayer fabric of the present invention is not particularly limited, examples thereof include a multilayer nonwoven fabric in which a spunbonded nonwoven fabric layer, a meltblown nonwoven fabric layer, and a spunbonded nonwoven fabric layer are laminated in this order (a structure of this multilayer nonwoven fabric will be hereinafter also referred to as "SMS structure"); a multilayer nonwoven fabric in which a spunbonded nonwoven fabric layer, a meltblown nonwoven fabric layer, a meltblown nonwoven fabric layer, and a spunbonded nonwoven fabric layer are laminated in this order (a structure of this multilayer nonwoven fabric will be hereinafter also referred to as "SMMS structure"); a multilayer nonwoven fabric in which a spunbonded nonwoven fabric layer, a spunbonded nonwoven fabric layer, a meltblown nonwoven fabric layer, a meltblown nonwoven fabric layer, and a spunbonded nonwoven fabric layer are laminated in this order (a structure of this multilayer nonwoven fabric will be hereinafter also referred to as "SSMMS structure"); and a multilayer nonwoven fabric in which a spunbonded nonwoven fabric layer, a meltblown nonwoven fabric layer, a meltblown nonwoven fabric layer, a meltblown nonwoven fabric layer, and a spunbonded nonwoven fabric

layer are laminated in this order (a structure of this multilayer nonwoven fabric will be hereinafter also referred to as "SMMMS structure"). Of those multilayer nonwoven fabrics, the SSMMS structure is preferred. In addition, the multilayer nonwoven fabric may also be a repetition structure in which those multilayer nonwoven fabrics are further repeated and laminated, for example, a repetition structure of an SMS structure, or the like. From the viewpoint of more increasing the strength and the water pressure resistance, the multilayer nonwoven fabric is preferably a multilayer nonwoven fabric of an SMMS structure, an SMMMS structure, or an SSMMS structure.

From the viewpoint of being used for a disposal diaper, it is preferred that the multilayer nonwoven fabric has an SSMMS structure because it is required to be thin and resistant to the water pressure.

From the viewpoint of being used for medical clothing, it is preferred that the multilayer nonwoven fabric has an SMMMS structure because it is especially required to have excellent water pressure resistance.

[Production method of multilayer nonwoven fabric]

Although a production method of the multilayer nonwoven fabric of the present invention is not particularly limited, it is preferred to include laminating, as two outermost layers, a spunbonded nonwoven fabric layer formed of a resin having a melting endotherm $\Delta H$, as measured from a melting endothermic curve which is obtained by holding the resin at -10°C for 5 minutes under a nitrogen atmosphere and then increasing the temperature at a rate of 10°C/min with a differential scanning calorimeter (DSC), of 90 J/g or less and, as at least one inner layer, a meltblown nonwoven fabric layer; and then heat treating the layers at a temperature of 130°C or lower.

A temperature of the heat treatment for fusing the nonwoven fabrics as the outermost layers and the nonwoven fabric as the inner layer can be properly chosen depending upon a basis weight of a total sum of the spunbonded nonwoven fabric layers in the multiplayer nonwoven fabric of the present invention such that not only the meltblown nonwoven fabric layer does not cause piercing, but also fusion of the fibers in the outermost layers and the inner layer with each other is sufficient.

(Spunbond method)

The spunbonded nonwoven fabric layer is formed by a spunbond method. As the spunbond method, a conventionally known method can be adopted. For example, according to the spunbond method, a melt kneaded resin composition is spun, stretched, and subjected to opening to form continuous long fibers, and the continuous long fibers are subsequently deposited on a movable collecting surface in a continuous step, followed by entanglement to produce an elastic nonwoven fabric. According to the spunbond method, the elastic nonwoven fabric can be continuously produced, and the elastic nonwoven fabric produced by the spunbond method has high strength because the fibers constituting the nonwoven fabric are a stretched continuous long fiber.

As for the spunbonded nonwoven fabric layer, fibers can be produced by extruding a molten polymer from a large nozzle having, for example, several thousand holes, or a group of small nozzles each having, for example, about 40 holes. After going out from the nozzle, the molten fibers are cooled by a crossflow cooling system and subsequently separated from the nozzle, followed by stretching by high-speed air. Typically, there are two kinds of air-damping methods, and the both utilize a venturi effect. A first method is performed by stretching filaments using a suction slot (slot stretching) and also performed in a width of a nozzle or a width of a machine. A second method is performed by stretching filaments through a nozzle or a suction gun. The filaments formed by this method are collected on a screen (wire) or a pore forming belt, thereby forming a web. Subsequently, the web passes through a compression roll and then goes between heated calender rolls, and an embossed portion on one roll is bounded in a portion including, for example, from 10% to 40% of the area of the web, thereby forming a nonwoven fabric.

A basis weight of the spunbonded nonwoven fabric layer of the multilayer nonwoven fabric of the present invention can be properly set up in relation to the basis weight of the whole in the multilayer nonwoven fabric.

In the case of being used for as a disposable diaper, though the basis weight of the spunbonded nonwoven fabric layer is not particularly limited, it is preferably from 1 to 100 $g/m^2$, preferably from 2 to 80 $g/m^2$, still more preferably from 3 to 70 $g/m^2$, and yet still more preferably from 5 to 60 $g/m^2$. It should be noted that from the viewpoints of making the multilayer nonwoven fabric thin and obtaining sufficient strength, the weight basis can also be made to be from 5 to 15 $g/m^2$. It should be noted that the foregoing basis weight is a weight basis of a total sum of the spunbonded nonwoven fabric layers in the multiplayer nonwoven fabric.

In the case of being used for medical clothing, though the weight basis of the spunbonded nonwoven fabric layer of the multilayer nonwoven fabric of the present invention is not particularly limited, it is preferably from 1 to 100 $g/m^2$, preferably from 2 to 80 $g/m^2$, still more preferably from 3 to 70 $g/m^2$, and yet still more preferably from 5 to 60 $g/m^2$. It should be noted that from the viewpoints of making the multilayer nonwoven fabric thin and obtaining sufficient strength, the weight basic can also be made to be from 5 to 30 $g/m^2$. It should be noted that the foregoing basis weight is a weight basis of a total sum of the spunbonded nonwoven fabric layers in the multiplayer nonwoven fabric.

(Meltblown method)

The meltblown nonwoven fabric layer is formed by a meltblown method. As the meltblown method, a conventionally known method can be adopted. For example, an elastic nonwoven fabric can be produced by extruding a melt kneaded resin from a nozzle and then bringing it into contact with a high-speed heated gas flow to provide fine fibers, and collecting those fine fibers on a porous support to form nonwoven fabric, followed by a heat fusion treatment, if desired. The nonwoven fabric produced by the meltblown method has excellent barrier properties and good texture because an average diameter of the fibers constituting the nonwoven fabric is small.

As for a specific step of the meltblown method, for example, a resin composition fused by an extruder is transferred into a metering melt pump, and the resin composition is sent to a special melt blowing die at a stable output speed by the melt pump. The resin composition which has come out from the die is brought into contact with high-temperature and high-speed air. This high-temperature and high-speed air stretches the filaments, and further, solidifies the filaments together with cooling air. All of the above-described fiber-forming steps are typically performed within several inches from the die. The fabric is formed by blowing the filaments directly onto a pore-forming belt. Although a distance between the nozzle and the pore-forming belt is not particularly limited, it is typically from 200 to 400 mm. In addition, in order to obtain fibers as fine as possible, though there is no particular limitation, it is preferred to use a resin composition having a very high MFR as 200 g/10 min or more.

So long as a water-resistant effect can be exhibited, a basis weight of the meltblown nonwoven fabric layer of the multilayer nonwoven fabric of the present invention can be properly set up in relation to the basis weight of the whole in the multilayer nonwoven fabric, and therefore, it is not particularly limited. The basis weight of the meltblown nonwoven fabric layer is preferably from 0.5 to 100 g/$m^2$, preferably from 0.8 to 80 g/$m^2$, still more preferably from 1 to 70 g/$m^2$, yet still more preferably from 1 to 60 g/$m^2$, and especially preferably from 1 to 50 g/$m^2$. It should be noted that from the viewpoints of making the multilayer nonwoven fabric thin and obtaining sufficient strength, the basis weight can also be made to be from 1 to 10 g/$m^2$. It should be noted that in the case where a plurality of meltblown nonwoven fabric layers are present in the multilayer nonwoven fabric, the foregoing basis weight is a basis weight of a total sum of the meltblown nonwoven fabric layers in the multiplayer nonwoven fabric.

From the viewpoint of being used for a disposable diaper, though a total basis weight of the multilayer non-fabric of the present invention is not particularly limited, it is preferably from 1.5 to 150 g/$m^2$, preferably from 3 to 100 g/$m^2$, still more preferably from 4 to 80 g/$m^2$, yet still more preferably from 5 to 70 g/$m^2$, and especially preferably from 5 to 60 g/$m^2$. It should be noted that from the viewpoints of making the multilayer nonwoven fabric thin and obtaining sufficient strength, the total weight basis can also be made to be from 5 to 15 g/$m^2$.

From the viewpoint of being used for medical clothing, though a total basis weight of the multilayer nonwoven fabric of the present invention is not particularly limited, it is preferably from 1.5 to 150 g/$m^2$, preferably from 3 to 100 g/$m^2$, still more preferably from 4 to 80 g/$m^2$, yet still more preferably from 5 to 70 g/$m^2$, and especially preferably from 5 to 60 g/$m^2$.

(Lamination method)

As for a method of laminating the spunbonded nonwoven fabric layer and the meltblown nonwoven fabric layer, the lamination can be performed according to any method without particular limitations so long as it is a method capable of laminating a spunbonded nonwoven fabric layer and a meltblown nonwoven fabric layer. For example, fibers formed by the meltblown method may be deposited directly on a spunbonded nonwoven fabric to form a meltblown nonwoven fabric, or a spunbonded nonwoven fabric and a meltblown nonwoven fabric, each of which has been produced in advance, may be superimposed.

The method of forming a meltblown nonwoven fabric directly on a spunbonded nonwoven fabric can be performed by a meltblown method of blowing a molten product of the resin composition onto the surface of a spunbonded nonwoven fabric to deposit fibers. At this time, it is preferred that the fibers formed by the meltblown method are blown and deposited on the spunbonded nonwoven fabric while setting the surface on the opposite side to the surface on the side where the molten product is blown to a negative pressure, and at the same time, the spunbonded nonwoven fabric and the meltblown nonwoven fabric are integrated, thereby laminating the spunbonded nonwoven fabric layer and the meltblown nonwoven fabric layer.

(Heat treatment)

In the production method of a multilayer nonwoven fabric of the present invention, in the case where a basis weight of the nonwoven fabric is small as in a multilayer nonwoven fabric to be used for a disposable diaper, it is preferred to perform a heat treatment at a temperature of 130°C or lower after laminating the above-described respective layers. The temperature of the heat treatment is more preferably from 40 to 130°C, still more preferably from 60 to 130°C, and

yet still more preferably from 80 to 125°C. In addition, in the case where a basis weight of the nonwoven fabric is large as in a multilayer nonwoven fabric to be used for medical clothing, it is preferred to perform a heat treatment at a temperature of 140°C or lower after laminating the above-described respective layers. The temperature of the heat treatment is more preferably from 40 to 140°C, still more preferably from 60 to 137°C, and yet still more preferably from 80 to 135°C.

In addition, examples of the heat treatment include heat fusion and annealing as described later, and the like.

(Heat fusion)

Examples of a method of fusing a spunbonded nonwoven fabric and a meltblown nonwoven fabric with each other by means of heat fusion include a method of subjecting the entire surface of the contact surface between the spunbonded nonwoven fabric and the meltblown nonwoven fabric to heat fusion; and a method of subjecting a part of the contact surface between the spunbonded nonwoven fabric and the meltblown nonwoven fabric to heat fusion. In the present invention, the spunbonded nonwoven fabric and the meltblown nonwoven fabric are preferably fused by a heat embossing processing method. In this case, a fusing area accounts for from 5 to 35%, and preferably from 10 to 30% of the contact area between the spunbonded nonwoven fabric and the meltblown nonwoven fabric. When the fusing area falls within the foregoing range, the multilayer nonwoven fabric is excellent in a balance between release strength and flexibility.

The above-described heat fusion is, for example, performed using a calender roll. On this occasion, as for a calender temperature, in the case where a basis weight of the nonwoven fabric is small as in a multilayer nonwoven fabric to be used for a disposable diaper, a temperature on the high-temperature side is preferably from 60 to 130°C, and preferably from 90 to 125°C, and a temperature on the low-temperature side is preferably from 60 to 125°C, and preferably from 60 to 120°C. In the case where a basis weight of the nonwoven fabric is large as in a multilayer nonwoven fabric to be used for medical clothing, a temperature on the high-temperature side is preferably from 60 to 140°C, and preferably from 90 to 135°C, and a temperature on the low-temperature side is preferably from 60 to 135°C, and preferably from 60 to 133°C. In addition, though a nip pressure is not particularly limited, it is preferably from 30 to 150 N/mm, more preferably from 30 to 130 N/mm, and still more preferably from 50 to 100 N/mm. It is preferred to perform embossing processing by this calender roll. In the multilayer nonwoven fabric of the present invention, since the melting endotherm of the outermost layer is low, it is possible to fuse the fibers with each other even at a low calender temperature. Thus, even in the case where the calender temperature is low, a nonwoven fabric which is free from nap and good in touch can be obtained.

(Annealing)

As other heat treatment, annealing may be performed, too. The annealing partially reduces an internal stress of the stretched fibers and recovers elastic recovery properties of the crystalline resin composition in the fibers. The annealing remarkably changes an internal crystal structure and a relative order of amorphous and semi-crystalline phases, thereby recovering elastic properties. The annealing can be performed by a conventional method, and for example, there is exemplified a method of allowing the fibers to pass through heating rolls. For example, an annealing temperature is preferably a temperature of 40°C or higher and slightly lower than a crystal melting point of the resin composition. More specifically, in the case where a basis weight of the nonwoven fabric is small as in a multilayer nonwoven fabric to be used for a disposable diaper, the annealing temperature is more preferably from 40 to 130°C, and still more preferably from 40 to 125°C. In the case where a basis weight of the nonwoven fabric is large as in a multilayer nonwoven fabric to be used for medical clothing, the annealing temperature is more preferably from 40 to 140°C, and still more preferably from 40 to 135°C.

[Application of multilayer nonwoven fabric]

As the fiber product using the nonwoven fabric of the present invention, for example, the following fiber products can be exemplified. That is, examples thereof include a member for disposable diaper, a stretchable member for diaper holder, a stretchable member for sanitary product, a stretchable member for hygienic product, a stretchable tape, an adhesive plaster, a stretchable member for clothing, an insulating material for clothing, a heat insulating material for clothing, a protective suit, a headwear, a face mask, a glove, an athletic supporter, a stretchable bandage, a bath cloth of fomentations, an anti-slipping base cloth, a vibration absorbing material, a fingerstall, an air filter for clean room, an electret filter with electret treatment, a separator, a heat insulator, a coffee bag, a food packaging material, various members for automobiles, such as a ceiling surface material for automobile, an acoustic insulating material, a cushioning material, a dust proof material for speaker, an air cleaner material, a surface material for insulator, a backing material, an adhesive nonwoven fabric sheet, a door trim, etc., various cleaning materials, such as a cleaning material for copier,

etc., a surface material and a backing material for carpet, an agricultural rolled cloth, a wood drain, a member for shoes, such as a surface material for sporting shoes, a member for bag, an industrial sealing material, a wiping material, a bed sheet, and the like.

In particular, the nonwoven fabric of the present invention is preferably used for hygienic products such as disposal diape, medical clothing, etc. That is, examples of a preferred use method of the multilayer nonwoven fabric of the present invention include a use method of the multilayer nonwoven fabric of the present invention for the production of a disposal diaper and a use method of the nonwoven fabric of the present invention for the production of medical clothing.

## Examples

### Production Example 1 [Production of low-crystalline polypropylene A]

20 L/h of n-heptane, 15 mmol/h of triisobutylaluminum, and 6 μmol/h, as converted to zirconium, of a catalyst component obtained by bringing dimethylanilinium tetrakispentafluorophenylborate, (1,2'-dimethylsilylene)(2,1'-dimethylsilylene)-bis(3-trimethylsilylmethylindenyl)zirconium dichloride, triisobutylaluminum, and propylene in a mass ratio of 1:2:20 into contact with each other in advance were continuously supplied into a stirrer-equipped stainless steel-made reactor having an internal volume of 20 L.

A polymerization temperature was set up at 55°C, and propylene and hydrogen were continuously supplied such that a hydrogen concentration in a vapor phase portion of the reactor and a total pressure within the reactor were kept at 8 mol% and 1.0 MPa G, respectively, thereby performing a polymerization reaction.

IRGANOX 1010 (manufactured by Ciba Specialty Chemicals Inc.) as a stabilizer was added to the resulting polymerization solution, such that its content proportion was 1,000 mass ppm. Subsequently, n-heptane that is a solvent was removed to obtain a low-crystalline polypropylene.

The low-crystalline polypropylene A had a weight-average molecular weight Mw of 120,000 and an Mw/Mn of 2.0. In addition, an [mmmm] was 50.3 mol%, an [rrrr]/(1-[mmmm]) was 0.038, an [rmrm] was 2.9 mol%, and an $[mm]\times[rr]/[mr]^2$ was 1.6, which were determined by the NMR measurement. Results are shown in Table 1. A melting point (Tm-D) determined by the DSC measurement was 75°C.

### Production Example 2 [Production of low-crystalline polypropylene B]

23.5 L/h of n-heptane, 24.6 mmol/h of triisobutylaluminum, and 12.7 μmol/h, as converted to zirconium, of a catalyst component obtained by bringing dimethylanilinium tetrakispentafluorophenylborate, (1,2'-dimethylsilylene)(2,1'-dimethylsilylene)-bis(3-trimethylsilylmethylindenyl)zirconium dichloride, triisobutylaluminum, and propylene into contact with each other in advance were continuously supplied into a stirrer-equipped stainless steel-made reactor having an internal volume of 0.2 $m^3$.

Propylene and hydrogen were continuously supplied at a polymerization temperature of 70°C, such that a hydrogen concentration in a vapor phase portion and a total pressure within the reactor were kept at 20 mol% and 1.0 MPa·G, respectively. IRGANOX 1010 (manufactured by Ciba Specialty Chemicals Inc.) was added to the resulting polymerization solution, such that its content was 1,000 ppm. The solvent was removed to obtain a low-crystalline polypropylene B.

The low-crystalline polypropylene B had a weight-average molecular weight Mw of 45,000 and an Mw/Mn of 2.0. In addition, an [mmmm] was 47.9 mol%, an [rrrr]/(1-[mmmm]) was 0.046, an [rmrm] was 3.1 mol%, and an $[mm]\times[rr]/[mr]^2$ was 1.5, which were determined by the NMR measurement. Results are shown in Table 1. A melting point (Tm-D) determined by the DSC measurement was 76°C.

Table 1

| | Production Example 1 | Production Example 2 |
|---|---|---|
| | Low-crystalline polypropylene A | Low-crystalline polypropylene B |
| [mmmm] (mol%) | 50.3 | 47.9 |
| [rrrr]/(1-[mmmm]) | 0.038 | 0.046 |
| [rmrm] (mol%) | 2.9 | 3.1 |
| $[mm]\times[rr]/[mr]^2$ | 1.6 | 1.5 |
| Weight-average molecular weight (Mw) | 120000 | 45000 |
| Molecular weight distribution (Mw/Mn) | 2.0 | 2.0 |

(continued)

| | Production Example 1 | Production Example 2 |
|---|---|---|
| | Low-crystalline polypropylene A | Low-crystalline polypropylene B |
| Melting point (Tm-D) (°C) | 75 | 76 |

It should be noted that the foregoing physical properties were determined by the following measurements.

[Measurements of weight-average molecular weight (Mw) and molecular weight distribution (Mw/Mn)]

A weight-average molecular weight (Mw) and molecular weight distribution (Mw/Mn) were determined by the gel permeation chromatography (GPC) method. The following apparatus and conditions were used in the measurements, and a weight-average molecular as converted to polystyrene was obtained.

<GPC measuring apparatus>

Column: TOSO GMHHR-H(S)HT
Detector: RI detector for liquid chromatogram, WATERS 150C

<Measuring conditions>

Solvent: 1,2,4-trichlorobenzene
Measurement temperature: 145°C
Flow rate: 1.0 mL/min
Sample concentration: 2.2 mg/mL
Injection volume: 160 μL
Calibration curve: Universal Calibration
Analysis program: HT-GPC (Ver. 1.0)

[NMR measurement]

The measurement of a $^{13}$C-NMR spectrum was performed with the following apparatus under the following conditions. It should be noted that the assignment of a peak was performed in accordance with the method proposed in "Macromolecules, 8, 687 (1975)" by A. Zambelli, et al.

Apparatus: JNM-EX400 Type $^{13}$C-NMR apparatus, manufactured by JEOL Ltd.
Method: Complete proton decoupling method
Concentration: 220 mg/mL
Solvent: Mixed solvent of 1,2,4-trichlorobenzene and deuterium benzene (90/10, v/v)
Temperature: 130°C
Pulse width: 45°
Pulse repetition time: 4 seconds
Cumulated number: 10,000 times

<Calculation formulae>

$$M = m/S \times 100$$

$$R = \gamma/S \times 100$$

$$S = P\beta\beta + P\alpha\beta + P\alpha\gamma$$

S: Signal intensity of side-chain methyl carbon atom in all propylene units $P\beta\beta$: 19.8 to 22.5 ppm
$P\alpha\beta$: 18.0 to 17.5 ppm
$P\alpha\gamma$: 17.5 to 17.1 ppm
$\gamma$: Racemic pentad chain: 20.7 to 20.3 ppm
m: Meso pentad chain: 21.7 to 22.5 ppm

A meso pentad fraction [mmmm], a racemic pentad fraction [rrrr], and a racemic-meso-racemic-meso pentad fraction [rmrm] are determined in conformity with the method proposed in "Macromolecules, 6, 925 (1973)" by A. Zambelli, et al., and are a meso fraction, a racemic fraction, and a racemic-meso-racemic-meso fraction in a pentad unit in a polypropylene molecular chain measured with the signal of a methyl group in the $^{13}$C-NMR spectrum. As the meso pentad fraction [mmmm] increases, the stereoregularity increases. In addition, the triad fractions [mm], [rr], and [mr] were also calculated by the foregoing method.

[Measurement of melting point]

10 mg of a sample was subjected to temperature decrease to -10°C at a rate of 5°C/min under a nitrogen atmosphere with a differential scanning calorimeter (DSC-7, manufactured by Perkin Elmer, Inc.), held at -10°C for 5 minutes, and then subjected to temperature increase at a rate of 10°C/min, thereby obtaining a melting endothermic curve, from which was then determined a peak top of a peak observed on the highest temperature side thereof.

Example 1

[Molding of spunbonded nonwoven fabric layer laminate]

A polypropylene-based resin composition obtained by dry blending 10 mass% of the low-crystalline polypropylene A obtained in Production Example 1 and 90 mass% of a high-crystalline polypropylene having a melt flow rate (MFR) of 25 g/10 min (MOPLEN HP561R, manufactured by Basell) was melt extruded at a resin temperature of 246°C, and the molten resin was discharged from a nozzle with a nozzle diameter of 0.6 mm (number of holes: 5,800 holes/m) at a rate of 0.6 g/min per hole and spun. Fibers obtained by spinning were laminated on a net surface moving at a line speed of 870 m/min at a cabin pressure of 6,500 Pa, thereby molding a spunbonded nonwoven fabric (S). Furthermore, immediately thereafter, onto the foregoing spunbonded nonwoven fabric (S), another spunbonded nonwoven fabric (S) to be molded under the same conditions was blown to obtain a spunbonded multilayer nonwoven fabric (SS).

[Molding of meltblown nonwoven fabric layer and molding of multilayer nonwoven fabric of SSMMS structure]

A polypropylene-based resin composition obtained by dry blending 20 mass% of the low-crystalline polypropylene B obtained in Production Example 2 and 80 mass% of a high-crystalline polypropylene having an MFR of 1,550 g/10 min (ACHIEVE 6936, manufactured by Exxon Mobil Corporation) was discharged as molten resin at a resin temperature of 270°C from a nozzle (nozzle diameter: 0.36 mm, number of holes: 35 holes/inch) at a rate of 0.54 g/min per hole. The molten resin was subjected to two-layer blowing onto the above-described spunbonded nonwoven fabric laminate (SS) at a flow rate of 900 $Nm^3/h$ with compressed air at 270°C. Immediately thereafter, another spunbonded nonwoven fabric (S) was blown thereonto.

These were subjected to embossing processing (heat fusion of the fibers with each other) with heat rolls at a calender temperature of 122°C/119°C by pressurization at a nip pressure of 80 N/mm, thereby obtaining a multilayer nonwoven fabric S/S/M/M/S composed of spunbonded nonwoven fabric (S)/spunbonded nonwoven fabric (S)/meltblown nonwoven fabric (M)/meltblown nonwoven fabric (M)/spunbonded nonwoven fabric (S) (the spunbonded layer and the meltblown layer will be hereinafter also referred to simply as "S layer" and "M layer", respectively).

With respect to the used resin composition or the obtained multilayer nonwoven fabric, the measurement for melting endotherm $\Delta H$ and basis weight, the measurement for nonwoven fabric strength and water pressure resistance, and the like were performed. Results are shown in Table 2.

[Melting endotherm ΔH]

10 mg of a sample was held at -10°C for 5 minutes under a nitrogen atmosphere with a differential scanning calorimeter (DSC-7, manufactured by Perkin Elmer, Inc., computer part: "START PYRIS", manufactured by Perkin Elmer, Inc.) and then subjected to temperature increase at a rate of 10°C/min, thereby obtaining a melting endothermic curve, from which was then determined an area of a melting endotherm peak and calculated a melting endotherm ΔH of the polypropylene-based resin composition. Results are shown in Table 2.

[Measurement of basis weight]

A mass of 5 cm × 5 cm of the resulting nonwoven fabric was measured to calculate a basis weight (g/$m^2$). In addition, a basis weight ratio of the S layer to the M layer was calculated from the basis weight of the whole of the nonwoven fabric and the discharge amount ratio of each layer. Results are shown in Table 2.

[Nonwoven fabric strength]

A test piece having a size of 150 mm in length × 50 mm in width was sampled from the resulting nonwoven fabric in each of a machine direction (MD) and a transverse direction (TD) to the machine direction. Using a tensile tester (AUTOGRAPH AG-I, manufactured by Shimadzu Corporation), an initial length $L_0$ was set up to 100 mm; the test piece was elongated at a tensile rate of 300 mm/min; a strain and a load were measured in the elongation process; and a maximum strength in a process until the nonwoven fabric was broken was defined as the nonwoven fabric strength. Results are shown in Table 2.

[Measurement of water pressure resistance]

The measurement was performed in conformity with JIS L1092. The measurement was performed for three arbitrary sites of each of the embossed surface and anti-embossed surface of the non-woven fabric with a water resistance tester (manufactured by Daiei Kagaku Seiki Mfg. Co., Ltd.), and an average value of the measured values was defined as the water pressure resistance. Results are shown in Table 2.

[Fusibility]

The resulting multilayer nonwoven fabric was visually inspected, and the fusibility thereof was evaluated according to the following criteria. Results are shown in Table 2.

○: The surface of the multilayer nonwoven fabric is not napped. The surface is smooth.
×: The surface of the multilayer nonwoven fabric is napped. The surface is rough.

Example 2

A nonwoven fabric was molded in the same manner as that in Example 1, except that in Example 1, the single-hole discharge amount of the spunbonded nonwoven fabric (S) was changed to 0.4 g/min, the cabin pressure was changed to 5,500 Pa, the line speed was changed to 880 m/min, and the calender temperature was changed to 108°C/102°C, and the same measurements and evaluations were performed. Results are shown in Table 2.

Example 3

A nonwoven fabric was molded in the same manner as that in Example 1, except that in Example 1, the single-hole discharge amount of the spunbonded nonwoven fabric (S) was changed to 0.34 g/min, the cabin pressure was changed to 5,000 Pa, the line speed was changed to 940 m/min, and the calender temperature was changed to 105°C/102°C, and the same measurements and evaluations were performed. Results are shown in Table 2.

Comparative Example 1

A nonwoven fabric was molded in the same manner as that in Example 1, except that in Example 1, the low-crystalline polypropylenes A and B were not added in the spunbonded nonwoven fabric (S) and the meltblown nonwoven fabric (M), respectively, the cabin pressure of the spunbonded nonwoven fabric (S) was changed to 4,500 Pa, the flow rate of high-temperature compressed air of the meltblown nonwoven fabric (M) was changed to 800 $Nm^3$/h, the line

speed was changed to 851 m/min, and the calender temperature was changed to 135°C/138°C, and the same measurements and evaluations were performed. Results are shown in Table 2.

Comparative Example 2

A nonwoven fabric was molded in the same manner as that in Example 1, except that in Example 1, the low-crystalline polypropylenes A and B were not added in the spunbonded nonwoven fabric (S) and the meltblown nonwoven fabric (M), respectively, and the cabin pressure of the spunbonded nonwoven fabric (S) was changed to 4,500 Pa, and the same measurements and evaluations were performed. Results are shown in Table 2.

Table 2

| | | | Example 1 | Example 2 | Example 3 | Comparative Example 1 | Comparative Example 2 |
|---|---|---|---|---|---|---|---|
| Spunbonded nonwoven fabric (S) | Formulation of resin | High -crystalline polypropylene 1 (mass%) | 90 | 90 | 90 | 100 | 100 |
| | | Low-crystalline polypropylene A (mass%) | 10 | 10 | 10 | 0 | 0 |
| | Physical properties of resin | MFR (g/10 min) | 27 | 27 | 27 | 25 | 25 |
| | | ΔH (J/g) | 82 | 82 | 82 | 92 | 92 |
| | Molding conditions | Single-hole discharge amount (g/min) | 0.6 | 0.4 | 0.34 | 0.6 | 0.6 |
| | | Cabin pressure (Pa) | 6500 | 5500 | 5000 | 4500 | 4500 |
| Meltblown nonwoven fabric (M) | Formulation of resin | High-crystalline polypropylene 2 (mass%) | 80 | 80 | 80 | 100 | 100 |
| | | Low-crystalline polypropylene B (mass%) | 20 | 20 | 20 | 0 | 0 |
| | Physical properties of resin | MFR (g/10 min) | 1631 | 1631 | 1631 | 1550 | 1550 |
| | Molding conditions | Single-hole discharge amount (g/min) | 0.54 | 0.54 | 0.54 | 0.54 | 0.54 |
| | | High-temperature compressed air: temperature (°C) | 270 | 270 | 270 | 270 | 270 |
| | | High-temperature compressed air: flow rate ($Nm^3/h$) | 900 | 900 | 900 | 800 | 900 |

(continued)

| | | | | Example 1 | Example 2 | Example 3 | Comparative Example 1 | Comparative Example 2 |
|---|---|---|---|---|---|---|---|---|
| Nonwoven fabric laminate (S/S/M/M/S) | Line speed (m/min) | | | 870 | 880 | 940 | 851 | 870 |
| | Embossing conditions | Calender temperature (°C) | | 122/119 | 108/102 | 105/102 | 135/138 | 122/119 |
| | | Nip pressure (N/mm) | | 80 | 80 | 80 | 80 | 80 |
| | Characteristics of nonwoven fabric | Basis weight (g/m$^2$) | Whole | 13 | 10 | 8 | 13 | 13 |
| | | | Total sum of S layer | 11.3 | 8.3 | 6.4 | 11.3 | 11.3 |
| | | | Total sum of M layer | 1.7 | 1.7 | 1.6 | 1.7 | 1.7 |
| | | Fiber diameter (μm) | S layer | 15.7 | 15.4 | 15.4 | 17.1 | 17.1 |
| | | | M layer | 1.5 | 1.8 | 1.8 | 1.9 | 1.9 |
| | | Nonwoven fabric strength (N/5 cm) | MD direction | 28 | 21 | 18 | 34 | 20 |
| | | | TD direction | 11 | 8 | 6 | 13 | 6 |
| | | Water pressure resistance (mmAq) | | 143 | 133 | 133 | 117 | 117 |
| | | Fusibility | | ○ | ○ | ○ | ○ | × |
| High-crystalline polypropylene 1: MOPLEN HP561R<br>High-crystalline polypropylene 2: ACHIEVE 6936 | | | | | | | | |

In Comparative Example 1, when the S layer was composed of only the high-crystalline polypropylene for the purpose of increasing the strength, the M layer was pierced at the time of fusion, and the water pressure resistance was lowered.

In Comparative Example 2, when the fusion temperature was decreased for the purpose of preventing the occurrence of piercing at the time of fusion, though piercing did not occur, a non-bonded portion was generated, and the strength was decreased. In addition, water leakage was generated from the non-bonded portion, resulting in deterioration of the water pressure resistance, too.

In Examples 1 to 3, the M layer was not pierced, and the layer-to-layer adhesion was good.

In Examples 2 and 3, nevertheless the basis weight was low, the result of good water pressure resistance was exhibited.

Example 4

[Molding of spunbonded nonwoven fabric layer laminate]

A polypropylene-based resin composition obtained by dry blending 10 mass% of the low-crystalline polypropylene A obtained in Production Example 1 and 90 mass% of a high-crystalline polypropylene having a melt flow rate (MFR) of 36 g/10 min (EXXON 3155, manufactured by Exxon Mobil Corporation) was melt extruded at a resin temperature of 245°C, and the molten resin was discharged from a nozzle with a nozzle diameter of 0.6 mm (number of holes: 5,800 holes/m) at a rate of 0.5 g/min per hole and spun. Fibers obtained by spinning were laminated on a net surface moving at a line speed of 227 m/min at a cabin pressure of 4,000 Pa, thereby molding a spunbonded nonwoven fabric (S).

[Molding of meltblown nonwoven fabric layer and molding of multilayer nonwoven fabric of SMMMS structure]

A high-crystalline polypropylene having an MFR of 1,200 g/10 min (BORFLOW HL512FB, manufactured by Borealis AG) was discharged as molten resin at a resin temperature of 255°C from a nozzle (nozzle diameter: 0.36 mm, number of holes: 35 holes/inch) at a rate of 0.54 g/min per hole. The resulting molten resin was subjected to three-layer blowing onto the above-described spunbonded nonwoven fabric (S) at a flow rate of 700 $Nm^3/h$ with compressed air at 270°C. Immediately thereafter, another spunbonded nonwoven fabric (S) was blown thereonto.

These were subjected to embossing processing (heat fusion of the fibers with each other) with heat rolls at a calender temperature of 135°C/132°C by pressurization at a nip pressure of 110 N/mm, thereby obtaining a multilayer nonwoven fabric S/M/M/M/S composed of spunbonded nonwoven fabric (S)/meltblown nonwoven fabric (M)/meltblown nonwoven fabric (M)/meltblown nonwoven fabric (M)/spunbonded nonwoven fabric (S) (the spunbonded layer and the meltblown layer will be hereinafter also referred to simply as "S layer" and "M layer", respectively).

With respect to the used resin composition or the obtained multilayer nonwoven fabric, the measurement for melting endotherm ΔH and basis weight, the measurement for nonwoven fabric strength and water pressure resistance, and the like were performed in the same manners as those in Example 1. Results are shown in Table 3.

Comparative Example 3

A nonwoven fabric was molded in the same manner as that in Example 4, except that in Example 4, the low-crystaliine polypropylene A was not added in the spunbonded nonwoven fabric (S), and the calender temperature was changed to 137°C/135°C, and the same measurements and evaluations were performed. Results are shown in Table 3.

Table 3

| | | | | Example | Comparative Example |
|---|---|---|---|---|---|
| | | | | 4 | 3 |
| Spunbonded nonwoven fabric (S) | Formulation of resin | High-crystalline polypropylene 3 (mass%) | | 90 | 100 |
| | | Low-crystalline polypropylene A (mass%) | | 10 | 0 |
| | Physical properties of resin | MFR (g/10 min) | | 37 | 36 |
| | | ΔH (J/g) | | 86 | 96 |
| | Molding conditions | Single-hole discharge amount (g/min) | | 0.5 | 0.5 |
| | | Cabin pressure (Pa) | | 4000 | 4000 |
| Meltblown nonwoven fabric (M) | Formulation of resin | High-crystalline polypropylene 4 (mass%) | | 100 | 100 |
| | Physical properties of resin | MFR (g/10 min) | | 1200 | 1200 |
| | Molding conditions | Single-hole discharge amount (g/min) | | 0.054 | 0.54 |
| | | High-temperature compressed air: temperature (°C) | | 270 | 270 |
| | | High-temperature compressed air: flow rate ($Nm^3/h$) | | 700 | 700 |
| Nonwoven fabric laminate (S/M/M/M/S) | Line speed (m/min) | | | 227 | 227 |
| | Embossing conditions | Calender temperature (°C) | | 135/132 | 137/135 |
| | | Nip pressure (N/mm) | | 110 | 110 |
| | Characteristics of nonwoven fabric | Basis weight ($g/m^2$) | Whole | 35 | 35 |
| | | | Total sum of S layer | 25 | 25 |
| | | | Total sum of M layer | 10 | 10 |
| | | Nonwoven fabric strength (N/5 cm) | MD direction | 76 | 83 |
| | | | TD direction | 44 | 47 |
| | | Water pressure resistance (mmAq) | | 611 | 555 |
| High-crystalline polypropylene 3: EXXON 3155<br>High-crystalline polypropylene 4: BORFLOW HL5612FB | | | | | |

In Example 4, since the low-crystalline polypropylene was added to the S layer, the fibers could be fused with each other at an appropriately low embossing temperature. For that reason, the occurrence of piercing of the M layer could be prevented, and as a result, the nonwoven fabric having high water pressure resistance could be obtained.

In Comparative Example 3, when the S layer was composed of only the high-crystalline polypropylene for the purpose of increasing the strength, and the embossing temperature was made low for the purpose of improving the water pressure resistance, though piercing did not occur, sufficient water pressure resistance was not obtained.

Industrial Applicability

The multilayer nonwoven fabric of the present invention has high strength and excellent water pressure resistance, and in particular, it is preferably used for hygienic products such as a disposal diaper, medical clothing, etc.

## Claims

1. A multilayer nonwoven fabric including three or more layers, wherein two outermost layers are spunbonded nonwoven fabric layers, at least one inner layer is a meltblown nonwoven fabric layer, a resin that forms the spunbonded nonwoven fabric layer has a melting endotherm ΔH, as measured from a melting endothermic curve which is obtained by holding the resin at

   - 10°C for 5 minutes under a nitrogen atmosphere and then increasing the temperature at a rate of 10°C/min with a differential scanning calorimeter (DSC), of 70 J/g or more and 90 J/g or less, and

   a resin that forms the meltblown nonwoven fabric layer has a melting endotherm ΔH, as measured from a melting endothermic curve which is obtained by holding the resin at

   - 10°C for 5 minutes under a nitrogen atmosphere and then increasing the temperature at a rate of 10°C/min with a differential scanning calorimeter (DSC), of 50 J/g or more and 93 J/g or less.

2. The multilayer nonwoven fabric according to claim 1, wherein the resin that forms the spunbonded nonwoven fabric layer contains from 1 to 50 mass% of a low-crystalline polypropylene and from 50 to 99 mass% of a high-crystalline polypropylene.

3. The multilayer nonwoven fabric according to claim 2, wherein the low-crystalline polypropylene satisfies the following characteristics (a) to (e):

   (a) [mmmm] = 20 to 60 mol%,
   (b) [rrrr]/(1-[mmmm]) $\leq$ 0.1,
   (c) weight-average molecular weight (Mw) = 10,000 to 200,000,
   (d) molecular weight distribution (Mw/Mn) < 4, and
   (e) a melting point (Tm-D), as defined as a peak top of a peak observed on the highest temperature side of a melting endothermic curve which is obtained by holding the low-crystalline polypropylene at -10°C for 5 minutes under a nitrogen atmosphere and then increasing the temperature at a rate of 10°C/min with a differential scanning calorimeter (DSC), is from 0 to 120°C.

4. The multilayer nonwoven fabric according to any one of claims 1 to 3, wherein the resin that forms the meltblown nonwoven fabric layer contains from 1 to 50 mass% of a low-crystalline polypropylene and from 50 to 99 mass% of a high-crystalline polypropylene, and the low-crystalline polypropylene satisfies the following characteristics (a) to (d) and (f) to (g):

   (a) [mmmm] = 20 to 60 mol%,
   (b) [rrrr]/(1-[mmmm]) $\leq$ 0.1,
   (c) weight-average molecular weight (Mw) = 10,000 to 200,000,
   (d) molecular weight distribution (Mw/Mn) < 4,
   (f) [rmrm] > 2.5 mol%, and
   (g) $[mm]\times[rr]/[mr]^2 \leq 2.0$.

5. A method for producing a multilayer nonwoven fabric including three or more layers, which includes laminating, as two outermost layers, spunbonded nonwoven fabric layers, each of which is formed of a resin having a melting endotherm ΔH, as measured from a melting endothermic curve which is obtained by holding the resin at -10°C for 5 minutes under a nitrogen atmosphere and then increasing the temperature at a rate of 10°C/min with a differential scanning calorimeter (DSC), of 70 J/g or more and 90 J/g or less and, as at least one inner layer, a meltblown nonwoven fabric layer; and then heat treating the layers at a temperature of 130°C or lower, and a resin that forms the meltblown nonwoven fabric layer has a melting endotherm ΔH, as measured from a melting

endothermic curve which is obtained by holding the resin at

- 10°C for 5 minutes under a nitrogen atmosphere and then increasing the temperature at a rate of 10°C/min with a differential scanning calorimeter (DSC), of 50 J/g or more and 93 J/g or less.

**Patentansprüche**

1. Ein mehrschichtiger Vliesstoff enthaltend drei oder mehr Schichten, wobei zwei äußerste Schichten Spinnvliesstoffschichten sind,
mindestens eine innere Schicht eine Meltblown-Vliesstoffschicht ist,
ein Harz, welches die Spinnvliesstoffschicht bildet, eine Schmelzendotherme ΔH, gemessen aus einer schmelzendothermen Kurve, die durch Halten des Harzes bei -10°C für 5 Minuten unter einer Stickstoffatmosphäre und dann Erhöhen der Temperatur mit einer Rate von 10°C/min mit einem Differentialscanningkalorimeter (DSC) erhalten wird, von 70 J/g oder mehr und 90 J/g oder weniger aufweist, und
ein Harz, welches die Meltblown-Vliesstoffschicht bildet, eine Schmelzendotherme ΔH, gemessen aus einer schmelzendothermen Kurve, die durch Halten des Harzes bei

   - 10°C für 5 Minuten unter einer Stickstoffatmosphäre und dann Erhöhen der Temperatur mit einer Rate von 10°C/min mit einem Differentialscanningkalorimeter (DSC) erhalten wird, von 50 J/g oder mehr und 93 J/g oder weniger aufweist.

2. Der mehrschichtige Vliesstoff gemäß Anspruch 1, wobei das Harz, welches die Spinnvliesstoffschicht bildet, 1 bis 50 Massen-% eines niederkristallinen Polypropylens und 50 bis 99 Massen-% eines hochkristallinen Polypropylens enthält.

3. Der mehrschichtige Vliesstoff gemäß Anspruch 2, wobei das niederkristalline Polypropylen die folgenden Charakteristika (a) bis (e) erfüllt:

   (a) [mmmm] = 20 bis 60 Mol-%,
   (b) [rrrr]/(1- [mmmm]) $\leq$ 0,1,
   (c) Gewichtsmittel des Molekulargewichts (Mw) = 10.000 bis 200.000,
   (d) Molekulargewichtsverteilung (Mw/Mn) < 4 und
   (e) ein Schmelzpunkt (Tm-D), wie als eine Peakspitze eines Peaks definiert, welche auf der Seite höchster Temperatur einer schmelzendothermen Kurve zu sehen ist, welche durch Halten des niederkristallinen Polypropylens bei -10°C für 5 Minuten unter einer Stickstoffatmosphäre und dann Erhöhen der Temperatur mit einer Rate von 10°C/min mit einem Differentialscanningkalorimeter (DSC) erhalten wird, 0 bis 120°C beträgt.

4. Der mehrschichtige Vliesstoff gemäß einem der Ansprüche 1 bis 3, wobei das Harz, welches die Meltblown-Vliesstoffschicht bildet, 1 bis 50 Massen-% eines niederkristallinen Polypropylens und 50 bis 99 Massen-% eines hochkristallinen Polypropylens enthält, und das niederkristalline Polypropylen die folgenden Charakteristika (a) bis (d) und (f) bis (g) erfüllt:

   (a) [mmmm] = 20 bis 60 Mol-%,
   (b) [rrrr]/(1- [mmmm]) $\leq$ 0,1,
   (c) Gewichtsmittel des Molekulargewichts (Mw) = 10.000 bis 200.000,
   (d) Molekulargewichtsverteilung (Mw/Mn) < 4,
   (f) [rmrm] > 2,5 Mol-% und
   (g) $[mm]\times[rr]/[mr]^2 \leq 2{,}0$.

5. Ein Verfahren zur Herstellung eines mehrschichtigen Vliesstoffes enthaltend drei oder mehr Schichten, welches das Laminieren, als zwei äußerste Schichten, von Spinnvliesstoffschichten, wobei jede der Schichten aus einem Harz gebildet ist, welches eine Schmelzendotherme ΔH, gemessen aus einer schmelzendothermen Kurve, die durch Halten des Harzes bei -10°C für 5 Minuten unter einer Stickstoffatmosphäre und dann Erhöhen der Temperatur mit einer Rate von 10°C/min mit einem Differentialscanningkalorimeter (DSC) erhalten wird, von 70 J/g oder mehr und 90 J/g oder weniger aufweist, und als mindestens eine innere Schicht, eine Meltblown-Vliesstoffschicht beinhaltet; und dann Wärmebehandeln der Schichten bei einer Temperatur von 130°C oder weniger, und
ein Harz, welches die Meltblown-Vliesstoffschicht bildet, eine Schmelzendotherme ΔH, gemessen aus einer schmelzendothermen Kurve, die durch Halten des Harzes bei

- 10°C für 5 Minuten unter einer Stickstoffatmosphäre und dann Erhöhen der Temperatur mit einer Rate von 10°C/min mit einem Differentialscanningkalorimeter (DSC) erhalten wird, von 50 J/g oder mehr und 93 J/g oder weniger aufweist.

**Revendications**

1. Etoffe non tissée multicouche comportant trois couches ou plus, dans laquelle les deux couches extérieures sont des couches d'étoffe non tissée du type « spunbond »,
au moins une couche intérieure est une couche d'étoffe non tissée obtenue par voie fondue,
une résine qui forme la couche en étoffe non tissée du type « spunbond » a un endotherme de fusion ΔH, mesuré à partir d'une courbe endothermique de fusion qui est obtenue en maintenant la résine à -10°C pendant 5 minutes dans une atmosphère d'azote, puis en élevant la température à une vitesse de 10 °C/min à l'aide d'un calorimètre à balayage différentiel (DSC), de 70 J/g ou plus et de 90 J/g ou moins, et
une résine qui forme la couche en étoffe non tissée obtenue par voie fondue a un endotherme de fusion ΔH, mesuré à partir d'une courbe endothermique de fusion qui est obtenue en maintenant la résine à -10°C pendant 5 minutes dans une atmosphère d'azote puis en élevant la température à une vitesse de 10 °C/min à l'aide d'un calorimètre à balayage différentiel (DSC), de 50 J/g ou plus et de 93 J/g ou moins.

2. Etoffe non tissée multicouche selon la revendication 1, dans laquelle la résine qui forme la couche en étoffe non tissée du type « spunbond » contient de 1 à 50 % en poids d'un polypropylène faiblement cristallin et de 50 à 99 % en poids d'un polypropylène fortement cristallin.

3. Etoffe non tissée multicouche selon la revendication 2, dans laquelle le polypropylène faiblement cristallin satisfait les caractéristiques (a) à (e) suivantes :

   (a) [mmmm] = 20 à 60 % en mol,
   (b) [rrrr]/(1-[mmmm]) ≤ 0,1,
   (c) poids moléculaire moyen en poids (Mw) = 10 000 à 200 000,
   (d) distribution des poids moléculaires (Mw/Mn) < 4, et
   (e) un point de fusion (Tm-D), défini comme un sommet de pic d'un pic observé côté température la plus élevée d'une courbe endothermique de fusion qui est obtenue en maintenant le polypropylène faiblement cristallin à -10 °C pendant 5 minutes dans une atmosphère d'azote puis en élevant la température à une vitesse de 10 °C/min à l'aide d'un calorimètre à balayage différentiel (DSC), est de 0 à 120 °C.

4. Etoffe non tissée multicouche selon l'une quelconque des revendications 1 à 3, dans laquelle la résine qui forme la couche d'étoffe non tissée obtenue par voie fondue contient de 1 à 50 % en poids d'un polypropylène faiblement cristallin et de 50 à 99 % en poids d'un polypropylène fortement cristallin, et le polypropylène faiblement cristallin satisfait les caractéristiques (a) à (d) et (f) à (g) suivantes :

   (a) [mmmm] = 20 à 60 % en mol,
   (b) [rrrr]/(1-[mmmm]) ≤ 0,1,
   (c) poids moléculaire moyen en poids (Mw) = 10 000 à 200 000,
   (d) distribution des poids moléculaires (Mw/Mn) < 4,
   (f) [rmrm] > 2,5 % en mol, et
   (g) $[mm] \times [rr]/[mr]^2 \leq 2{,}0$.

5. Méthode de production d'une étoffe non tissée multicouche comportant trois couches ou plus, qui comprend la stratification, à titre des deux couches extérieures, de couches d'étoffe non tissée du type « spunbond », qui sont chacune formée d'une résine ayant un endotherme de fusion ΔH, mesuré à partir d'une courbe endothermique de fusion qui est obtenue en maintenant la résine à -10 °C pendant 5 minutes dans une atmosphère d'azote, puis en élevant la température à une vitesse de 10 °C/min à l'aide d'un calorimètre à balayage différentiel (DSC), de 70 J/g ou plus et de 90 J/g ou moins et, à titre d'au moins une couche intérieure, d'une couche d'étoffe non tissée obtenue par voie fondue ; puis le traitement thermique des couches à une température de 130 °C ou moins, et
une résine qui forme la couche d'étoffe non tissée obtenue par voie fondue a un endotherme de fusion ΔH, mesuré à partir d'une courbe endothermique de fusion qui est obtenue en maintenant la résine à -10 °C pendant 5 minutes

dans une atmosphère d'azote puis en élevant la température à une vitesse de 10 °C/min à l'aide d'un calorimètre à balayage différentiel (DSC), de 50 J/g ou plus et de 93 J/g ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011090132 A
- EP 2479331 A


### Non-patent literature cited in the description


- **A. ZAMBELLI.** *Macromolecules,* 1975, vol. 8, 687
- **A. ZAMBELLI.** *Macromolecules,* 1973, vol. 6, 925